# FASCICULE DE BREVET EUROPEEN

(11) **EP 3 152 097 B1**
(45) Date de publication et mention de la délivrance du brevet: **03.04.2019**
(21) Numéro de dépôt: 15717189.3
(22) Date de dépôt: 03.04.2015
(51) Int. Cl.: B62D 15/02, B60T 8/17, B60Q 9/00, B62D 13/06, G01C 22/02, G01S 13/93, G05D 1/02

(54) **DISPOSITIF D'AIDE AU PARKING ET VEHICULE EQUIPE D'UN TEL DISPOSITIF**
PARKHILFESYSTEM VORRICHTUNG UND FAHRZEUG MIT EINER DERARTIGEN VORRICHTUNG
PARKING ASSISTANCE DEVICE AND VEHICLE PROVIDED WITH SUCH A DEVICE

(30) Priorité: 04.06.2014 FR 1455049
(43) Date de publication de la demande: 12.04.2017
(73) Titulaire: Commissariat à l'Énergie Atomique et aux Énergies Alternatives, 75015 Paris (FR)
(72) Inventeur: DHOME, Yoann, 94500 Champigny-sur-Marne (FR); BURGER, Brice, 91100 Corbeil-Essonnes (FR); SAYD, Patrick, 91140 Villebon sur Yvette (FR)
(74) Mandataire: Lucas, Laurent Jacques
(86) Numéro de dépôt international: PCT/EP2015/097002
(87) Numéro de publication internationale: WO 2015/185764

(56) Documents cités:
- EP-A1- 2 581 272
- EP-A2- 2 647 549
- DE-A1-102004 057 797
- US-A1- 2007 027 581
- US-A1- 2009 167 564

## Description

La présente invention concerne un dispositif d'aide au parking d'un véhicule. Elle s'applique notamment pour l'aide au parking de véhicules longs ou à gabarit exceptionnel. Elle concerne également un véhicule équipé d'un tel dispositif.

L'aide au parking peut être vue comme un confort dans certains cas, notamment pour les véhicules de tourisme ou autres véhicules légers. Mais pour un nombre croissant d'applications, l'aide au parking est devenue une fonction indispensable. C'est notamment le cas pour parquer des véhicules longs avec une grande précision.

Un tel besoin existe en particulier dans le trafic intra-portuaire. Ce trafic consiste à déplacer des containers entre les points de chargement/déchargement des cargos et les zones de stockage temporaire (relié aux infrastructures de transports routières et ferroviaires). Les phases de chargement/déchargement sont opérées à l'aide de moyens de levage mobiles (grues) qui vont charger/décharger des plateformes mobiles qui vont réaliser le transport entre les différents points du port. La précision du positionnement de la plateforme mobile lors de son stationnement est cruciale pour sécuriser et accélérer la tâche de chargement/déchargement,

En effet, les opérations de parking d'une plateforme ou remorque, véhiculée au moyen d'une cabine motorisée, est délicate et demande beaucoup de temps, même lorsqu'elles sont effectuées par des chauffeurs expérimentés. Des accidents peuvent par ailleurs survenir, portant atteinte aux matériels contenus dans les containers mais aussi aux personnes impliquées dans les manoeuvres alentour. Pour augmenter la productivité et la sécurité du trafic portuaire, il faut donc accélérer les opérations de parking et diminuer de façon importante le nombre d'accidents. Pour diminuer ces accidents, il faut charger et décharger les containers avec précision, ce qui exige de positionner précisément les plateformes dans les places de parking.

Pour améliorer la précision et sécuriser les opérations de chargement et de déchargement de containers sur des plateformes il existe des stations de parking équipées de parois latérales. Le problème est alors de parquer rapidement une plateforme, remorque ou véhicule long dans une aire de stationnement à quelques centimètres près. Une aide au parking ou un parking automatique est à cet effet nécessaire.
Un exemple d'application est de parvenir à faire s'insérer automatiquement un véhicule long de 13 mètre et large de 3 mètres, portant une charge utile de l'ordre de 60 tonnes, dans une place de parking avec une précision de positionnement de l'ordre du centimètre à partir d'une position de départ distante d'une quinzaine de mètres ou plus de la place de parking, lieu de stationnement.
Les solutions existantes utilisent des bornes magnétiques ou la technologie dite filoguidée. Ces solutions ont plusieurs inconvénients :
- Tout d'abords, elles nécessitent l'installation sur le véhicule d'antennes très proches du sol. Or, installer des éléments proches du sol sur un véhicule limite sa garde au sol et fait courir un risque aux antennes à travers des chocs avec des objets se trouvant sur le sol ;
- Dans tous les cas, les antennes doivent être positionnées très précisément, horizontalement et verticalement, ainsi qu'en termes de planéité. Cela est à la fois difficile techniquement et difficile à garantir sur la durée en raison des vibrations et des chocs, inévitables en phases opérationnelles ;
- De plus, il faut installer des dispositifs parfois actifs, transpondeurs ou fils métalliques alimenté, dans le sol, ce qui nécessite des travaux importants.
Ces solutions sont donc peu fiables et coûteuses.

Un document US 2009/167564 A1 décrit un dispositif d'aide au parking d'un véhicule à l'intérieur d'une aire de stationnement.

Un but de l'invention est notamment de pallier les inconvénients précités, et de permettre un stationnement rapide et précis, en toute sécurité, en particulier pour des véhicules longs ou ayant un gabarit exceptionnel. A cet effet l'invention a pour objet un dispositif d'aide au parking d'un véhicule à l'intérieur d'une aire de stationnement pourvue d'au moins une paroi latérale ayant des caractéristiques géométriques réparties longitudinalement, ledit dispositif étant apte à équiper un véhicule, et comportant au moins :
- un premier capteur placé sur le côté dudit véhicule faisant face à l'entrée de ladite aire, le faisceau de mesure dudit capteur balayant ladite aire, ledit capteur effectuant des mesures de distance et d'orientation dudit véhicule par rapport à ladite aire à partir de la reconstruction d'un nuage de points appartenant à la surface desdites parois ou de points d'échos réémis par de ladite au moins paroi ;
- une série de capteurs placés sur les côtés latéraux dudit véhicule destinés à mesurer la distance desdits côtés de ladite au moins paroi latérale, les faisceaux de mesure desdits capteurs balayant ladite au moins paroi de l'intérieur ;
- des moyens de traitement calculant la position et l'orientation relative dudit véhicule par rapport à ladite au moins paroi selon au moins trois phases successives :
   - une phase d'approche de ladite aire dans laquelle, ladite au moins parois étant balayés par le faisceau de mesure dudit premier capteur, la position et l'orientation relatives sont calculées par rapport à la position et l'orientation d'une forme globale de ladite au moins paroi déduite dudit nuage ;
   - une phase d'entrée dans la dite aire dans laquelle, la position et l'orientation relative sont au moins calculées par rapport à la position et l'orientation de formes géométriques simples déduites dudit nuage, fonctions desdites caractéristiques géométriques ;
   - une phase d'avancée dans ladite aire dans laquelle, les moyens de traitement calculent une position et une orientation relatives par comparaison dudit nuage avec un modèle mémorisé de ladite au moins paroi et calculent une autre position et une autre orientation relative à partir des mesures de distance effectuées par les capteurs de ladite série ;
lesdits moyens de traitement comportant un module de fusion des données effectuant un filtrage spatio-temporel des calculs de position et d'orientation relatives produits à partir des différents capteurs, les calculs ainsi filtrés donnant une information de position et d'orientation dudit véhicule pour le contrôle de son déplacement.

Le premier capteur est par exemple au moins un capteur lidar, ou au moins un capteur radar ou au moins un capteur vidéo.

Les capteurs de ladite série sont par exemple des capteurs ultrasoniques ou des capteurs télémétriques optiques.

Le filtrage spatio-temporel est par exemple effectué par un filtre de Kalman ou par une méthode de Monte Carlo.

Les moyens de traitement calculent par exemple une position et une orientation relatives à partir des mesures de distance effectuées par les capteurs de ladite série pendant la phase d'entrée.

Les moyens de traitement calculent par exemple une position et une orientation relatives par comparaison dudit nuage avec un modèle mémorisé est effectuée par application d'un algorithme d'estimation de transformation entre nuages de points.

Les mesures obtenues par ledit premier capteur sont par exemple échantillonnés selon une première période T1 et les mesures obtenues à partir des capteurs de ladite série sont échantillonnés selon une deuxième période T2, les calculs de positions et d'orientation étant effectués à l'intérieur d'une période.

Dans un mode de réalisation possible, les capteurs de ladite série sont par exemple positionnés selon des écarts croissants entre deux capteurs consécutifs, à partir du côté supportant ledit premier capteur.

Les moyens de traitement effectuent par exemple des vérifications de cohérences dans le temps et dans l'espace entres les calculs de position et d'orientation relatives successifs obtenus à partir des mesures dudit premier capteur, et entre les calculs de position et d'orientation relatives successifs obtenus à partir des mesures des capteurs de ladite série, les calculs cohérents étant fournis audit module de fusion de données. En cas de détection d'une incohérence entre deux positions et orientations successives, un signal d'alerte est par exemple émis.

Dans un mode de réalisation possible, le dispositif comporte en outre au moins un odomètre, placé sur une roue du véhicule, les moyens de traitement effectuant l'estimation du vecteur vitesse de déplacement dudit véhicule à partir des mesures de vitesse de roue produites par l'odomètre, ladite estimation produisant une estimation de position et d'orientation dudit véhicule pris en compte par le module de fusion de données pour définir la position et l'orientation relative dudit véhicule pour le contrôle de son déplacement.

L'invention concerne également un véhicule comportant un système de contrôle et de commande pour l'aide au pilotage, équipé d'un dispositif tel que décrit précédemment, ledit système fournissant les informations de positions et d'orientation dudit véhicule audit système de contrôle et de commande. Le véhicule est par exemple piloté automatiquement. Il est par exemple composé d'une cabine et d'une remorque, lesdits capteurs étant placés sur ladite remorque. Ledit véhicule peut être destiné à être chargé et déchargé de containers dans ladite aire de stationnement, par exemple dans une zone portuaire.

D'autres caractéristiques et avantages de l'invention apparaîtront à l'aide de la description qui suit, faite en regard de dessins annexés qui représentent :
- Les figures 1a et 1b, un exemple d'application d'aide au parking ;
- Les figures 2a et 2b, un exemple de véhicule et d'aire de stationnement utilisés dans l'exemple précédent ;
- La figure 3, sous forme simplifiée, un dispositif selon l'invention ;
- Les figures 4a à 4e, une illustration de différentes phases de parking effectuées à l'aide d'un dispositif selon l'invention ;
- Les figures 5a, 5b et 5c, une illustration des phases d'approche, d'entrée et de recul ;
- La figure 6, les modules possibles constituant les moyens de traitement d'un dispositif selon l'invention ;
- Les figures 7a et 7b, une illustration du fonctionnement d'un algorithme de transformation entre nuages de points pouvant être utilisé par un dispositif selon l'invention ;

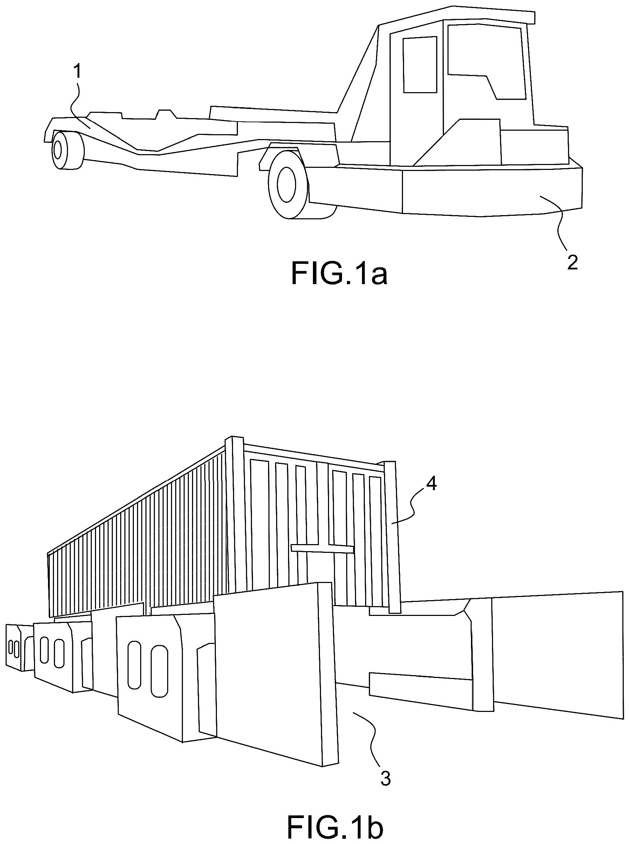

Les figures 1a et 1b présentent un exemple d'aide au parking auquel s'applique avantageusement l'invention. La figure 1a présente une plateforme mobile 1 remorquée ou poussée par une cabine 2 motorisée. Dans l'exemple de la figure 1a, la remorque 1 mesure par exemple 13 mètres de long et 3 mètres de large. Elle est utilisée dans le trafic portuaire pour être chargée d'un container dont le poids atteint plusieurs dizaines de tonnes.
La figure 1b présente une station de parking 3 destinée à accueillir la remorque 1. La station de parking sera décrite plus en détail par la suite. Dans l'exemple de la figure 1, elle supporte un container 4 prêt à être chargé sur la remorque 3 lorsque celle-ci sera en stationnement dans la station 3. L'invention est présentée avec un exemple d'aire de stationnement particulier 3. Elle s'applique bien sûr pour d'autres types d'aires de stationnement. Plus généralement elle s'applique également pour l'aide au parking précis, notamment de véhicules long, en dehors du trafic portuaire.

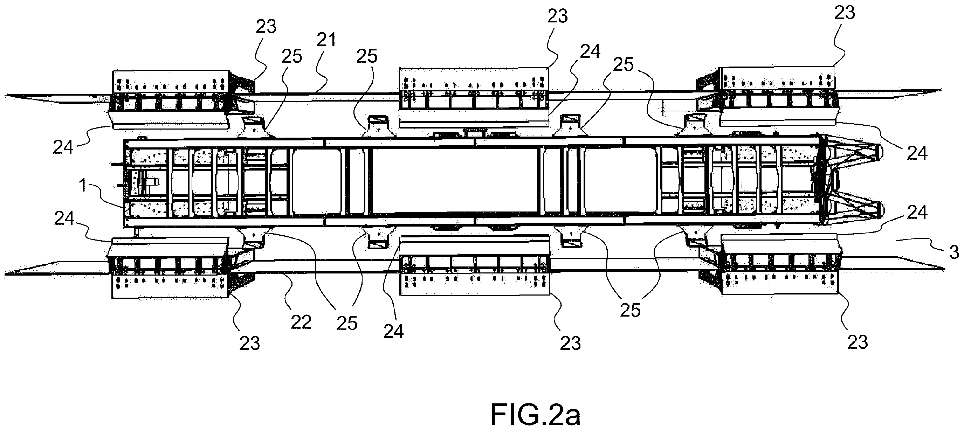

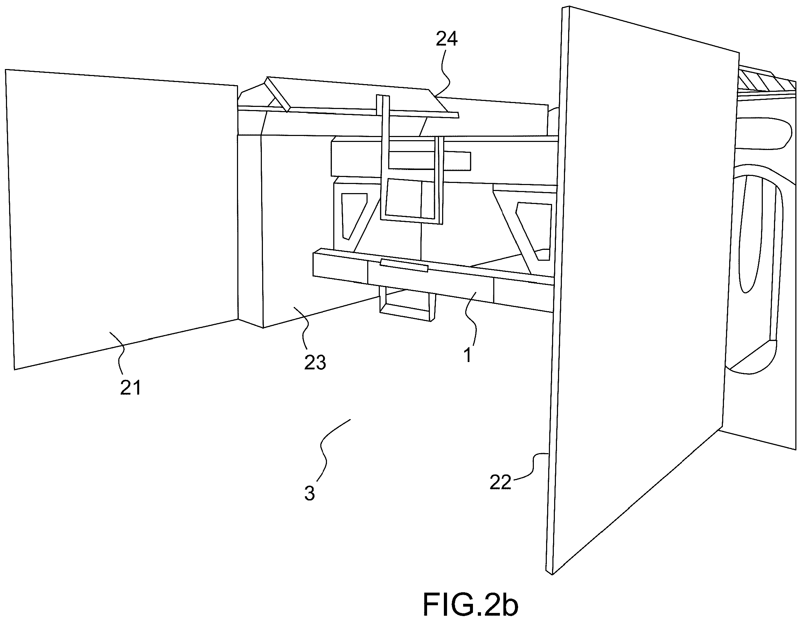

Les figures 2a et 2b précisent l'exemple particulier d'application de l'invention évoqué aux figures 1a et 1b. La figure 2b présente par une vue de dessus la remorque 1 en stationnement dans la station de parking 3, station que l'on pourra appeler par la suite station de chargement, signifiant que la remorque est chargée ou déchargée de son container dans cette station.
La figure 2b présente par une vue en perspective partielle, la remorque 1 pénétrant dans la station 3. Cette station comporte deux parois latérales 21, 22 en forme de créneaux. Les créneaux correspondent à des poteaux 23 surmontés de support 24, en sailli vers l'intérieur des parois. Ces supports 24 sont destinés à porter ensemble un container, l'ensemble des supports formant une surface d'accueil. Dans l'exemple de la figure 2a, trois poteaux 23 sont disposés de chaque côté.
La remorque 1 comporte une série de supports 25, en saillie vers l'extérieur, disposés latéralement de chaque côté. En stationnement, comme illustré par
la figure 2a, les supports 25 de la remorque sont disposés entre les poteaux. La remorque est alors prête à être chargée.
Le chargement d'un container 4 sur la remorque 1 se passe de la façon suivante :
- La remorque est mise de façon adéquat en stationnement comme illustré sur la figure 2a ;
- Le container 4 est posé sur les supports 24 de la station comme illustré par la figure 1b ;
- Les supports 25 de la remorque étant fixés sur une structure qui se soulève, les supports sont levés avec la structure pour atteindre le dessous du container, puis encore levés pour dépasser le niveau des supports 24 de la station, le container étant alors portés par les supports 25 seuls de la remorque ;
- Lorsque les supports 25 de la remorque ont atteint un niveau donné, la remorque 1 peut être retirée de la station, chargée par le container, les supports 25 portant le container passant alors au-dessus des supports 24 de la station.
Pour le déchargement du container, on effectue les étapes dans l'ordre inverse.
Les étapes précédentes montrent que la remorque 1 doit être placée avec précision dans la station de chargement 3, notamment en regard des parois latérales 21, 22. La précision attendue peut être de l'ordre du centimètre, voire moins. A cette exigence de précision, s'ajoute une contrainte de temps, la remorque devant être garée rapidement dans la station 3.

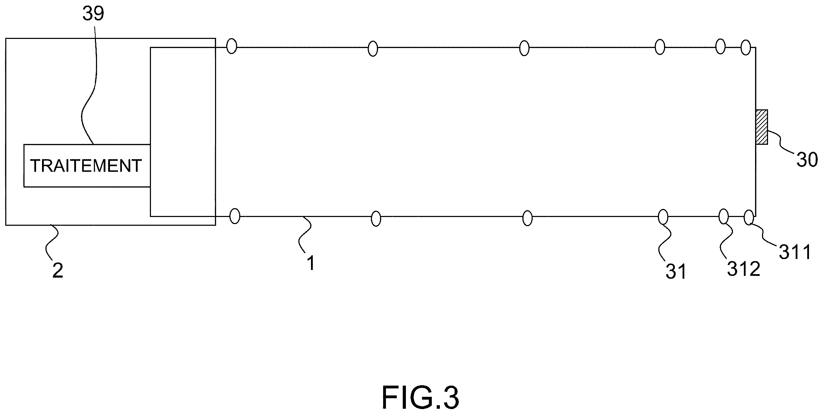

La figure 3 illustre de façon simplifiée un dispositif d'aide au parking selon l'invention, le dispositif étant présenté installé sur un véhicule. Le dispositif comporte des capteurs 30, 31 et des moyens de traitement 39. Plus particulièrement, la figure 3 présente la remorque 1 équipée de capteurs 30, 31, les moyens de traitement 39 étant par exemple disposés dans la cabine 2. Un dispositif selon l'invention a notamment pour fonction de fournir des informations de positionnement relatif de la remorque par rapport à une place de stationnement visée.
Un lidar 30 est placé à l'arrière de la remorque, plus particulièrement sur le côté qui fait face à l'entrée de l'aire de stationnement 3. Le lidar balaye un angle large, par exemple supérieur à 180°. Des capteurs ultrasoniques 31 sont disposés sur les côtés latéraux de la remorque.

Ayant une forme cylindre et une petite taille, ils peuvent être insérés dans la structure du véhicule, du châssis de la remorque 1 dans cet exemple. Avantageusement, il n'est pas nécessaire de positionner ces capteurs près du sol, car ils présentent des cônes de détection suffisamment large. Ils peuvent être positionnés régulièrement le long des côtés latéraux de la remorque 1, l'écart entre capteurs étant fonction des caractéristiques géométriques à détecter. De préférence, et avantageusement, les capteurs ultrasoniques 31 sont disposés selon des distances croissantes entre capteurs comme illustré par la figure 3, les deux premiers capteurs 311, 312 partant de l'arrière de la remorque étant les plus serrés. Dans l'exemple de la figure 3, six capteurs ultrasoniques sont placés de chaque côté de la remorque.
Le nombre de capteurs ultrasoniques dépend notamment des obstacles à rencontrer. Dans le présent exemple où la station 3 comporte des créneaux, il faut suffisamment de capteurs 31 pour mesurer en même temps les distances aux parois les plus rapprochées, correspondant aux créneaux, et les distances aux parois les plus éloignées.

Les données issues du capteur lidar 30 et des capteurs ultrasoniques 31 sont fusionnées et traitées par les moyens de traitement 39 d'une façon qui sera décrite par la suite.
Le lidar a une portée de plusieurs dizaines de mètres permettant dans un premier temps d'effectuer des recherches d'approche pour détecter l'entrée de l'aire de stationnement, c'est-à-dire l'entrée de la station de chargement 3 dans l'exemple d'application. Les capteurs ultrasoniques, d'une portée de plusieurs dizaines de centimètres, inférieure à un mètre, permettent d'obtenir des mesures précises.

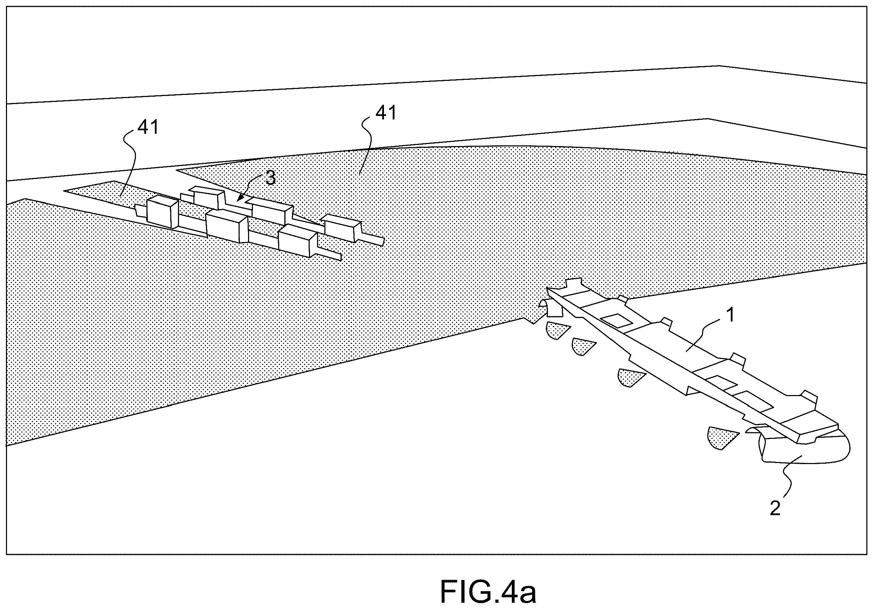

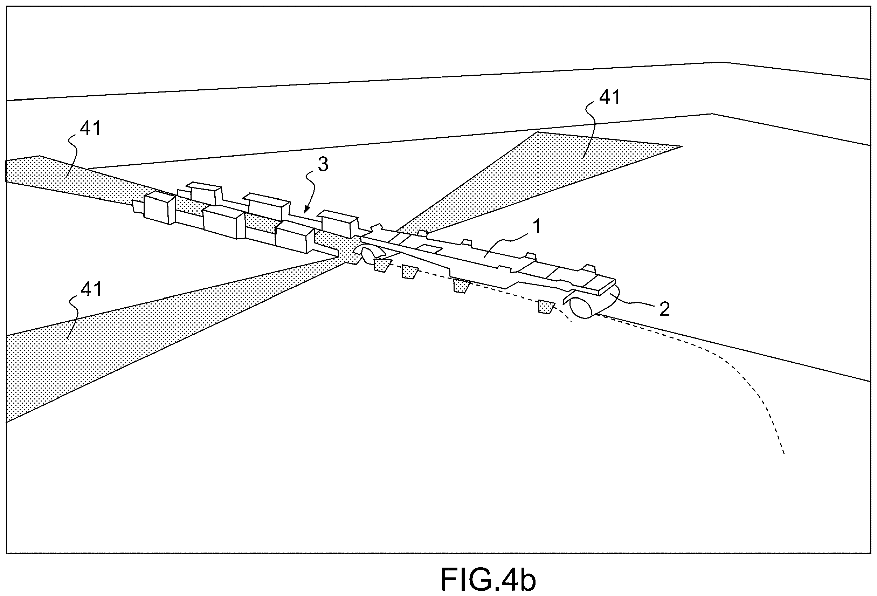

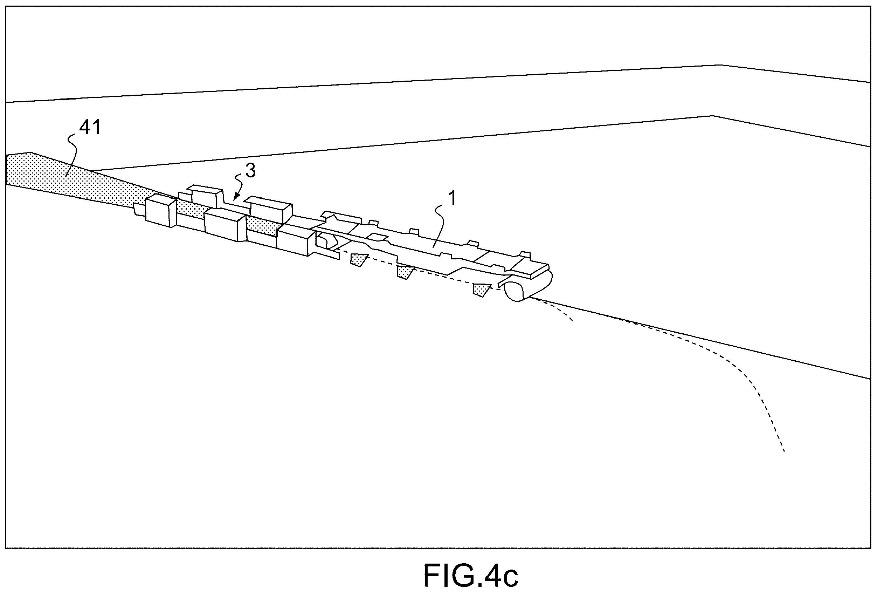

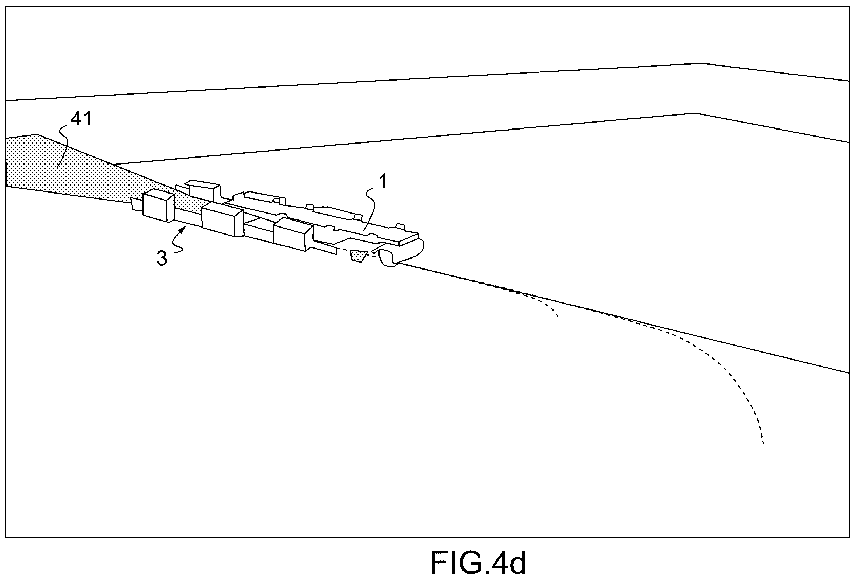

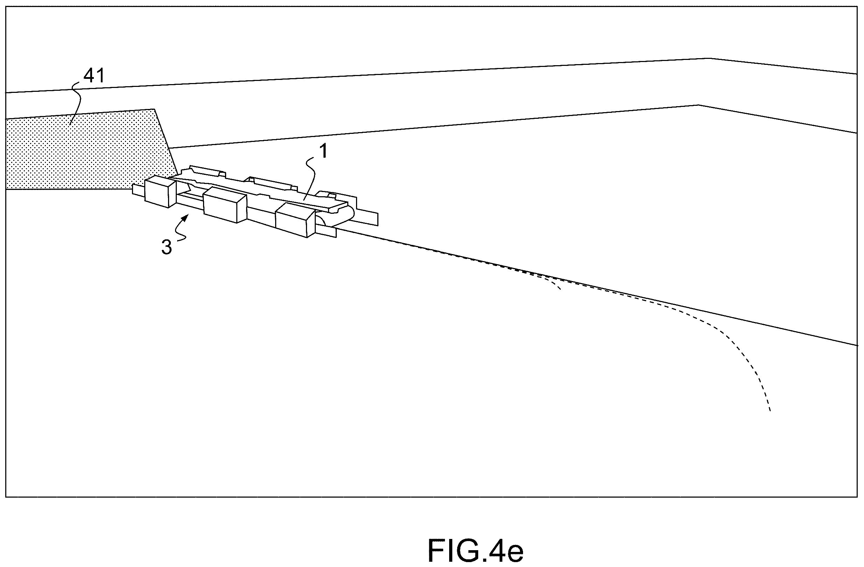

Les figures 4a à 4e illustrent les phases de parking effectuées à l'aide d'un dispositif selon l'invention, ces phases sont illustrées pour le parking dans une station de chargement 3. La fonction de parking effectuée par ce dispositif comporte trois phases successives :
- Une première phase illustrée par les figures 4a et 4b, dite phase d'approche, dans laquelle le dispositif fait approcher le véhicule 1, 2 jusqu'à quelques mètres de l'entrée de l'aire de stationnement 3, depuis un point de départ qui peut être à plusieurs dizaines de mètres, la seule contrainte étant que l'entrée de l'aire de stationnement soit couverte par le balayage 41 du lidar, c'est-à-dire détectable par ce dernier, en pratique l'arrière du véhicule peut s'approcher jusqu'à un ou deux mètres de l'entrée dans cette phase d'approche comme illustré par la figure 4b, le positionnement étant réalisé avec une précision de l'ordre de quelques centimètres, trois centimètres par exemple ;
- Un deuxième phase illustrée par la figure 4c, dite phase d'entrée, dans laquelle le dispositif fait s'insérer l'arrière du véhicule 1, 2 à l'intérieur de l'aire de stationnement 3, à l'intérieur de la station de décharge dans l'exemple des figures 1a, 1b, 2a et 2b. L'entrée, l'insertion, est réalisée sur une courte distance, quelques dizaines de centimètres, cinquante centimètres par exemple. Dans cette phase d'entrée, la précision de positionnement est de l'ordre du centimètre ;
- Une troisième phase illustrée par les figures 4d et 4e, dite phase de d'avancée, dans laquelle le dispositif fait avancer le véhicule 1, 2 jusqu'à sa position de stationnement finale (figure 4e), c'est-à-dire sa position de chargement/déchargement dans le présent exemple. Dans cette phase, la précision de positionnement peut être de l'ordre du millimètre. Cette phase d'avancée sera appelée par la suite phase de recul, en se référant à l'exemple d'application où le véhicule entre par l'arrière dans l'aire de stationnement. Il est bien sûr possible de prévoir des cas d'applications où le véhicule entre par l'avant.

Le capteur lidar 30 assure donc d'abord les phases d'approche et d'entrée. Ce capteur est capable de donner des mesures de distances :
- Sur un plan horizontal, la position du sol et l'orientation du véhicule en roulis étant essentielles ;
- Par rapport aux parois latérales 21, 22 de la station de chargement 3, pour connaître le lacet du véhicule et son positionnement latéral et longitudinal ;
Le lidar 30 est également capable de donner des informations pour détecter des arrêtes de la structure de la station formant des caractéristiques géométriques, notamment les arrêtes des bords d'entrée des parois latérales 21, 22 ou les arrêtes des créneaux 23.
Le lidar envoie une liste importante de points détectés, plus de 1000 points dans l'exemple des figures 4a à 4e, en coordonnées polaires sur un plan horizontal balayé par le faisceau 41. Le lidar est par exemple situé au centre du côté arrière de la remorque ou du véhicule, au dessus du pare-choc. Avantageusement, il n'est pas nécessaire de positionner le lidar près du sol.

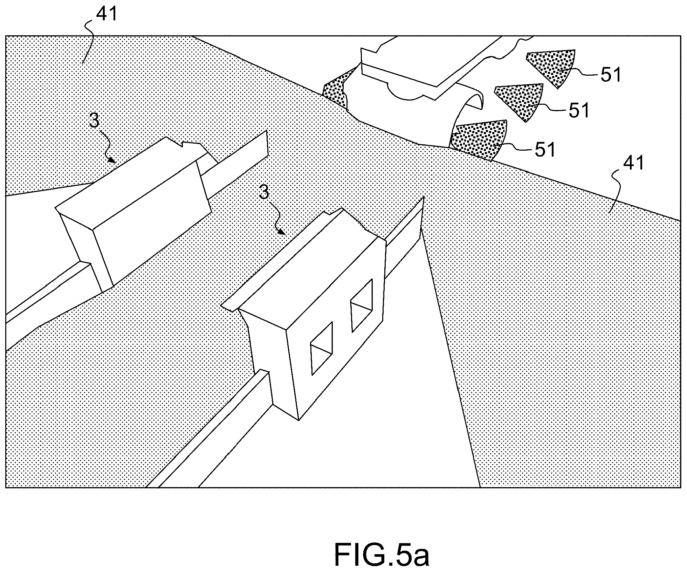

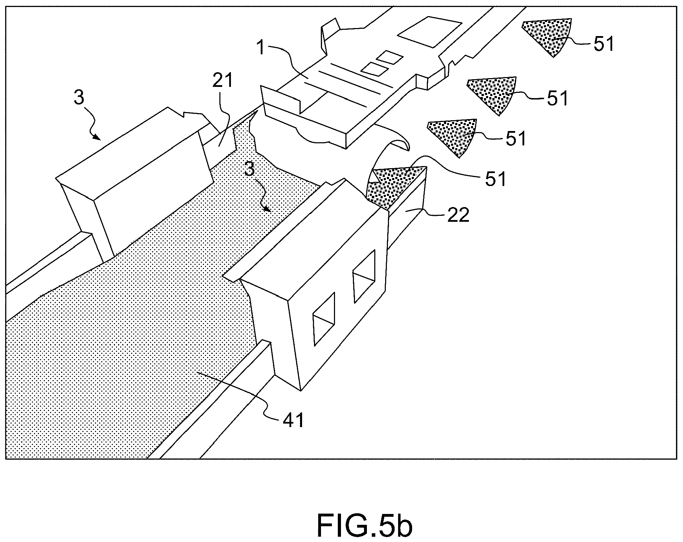

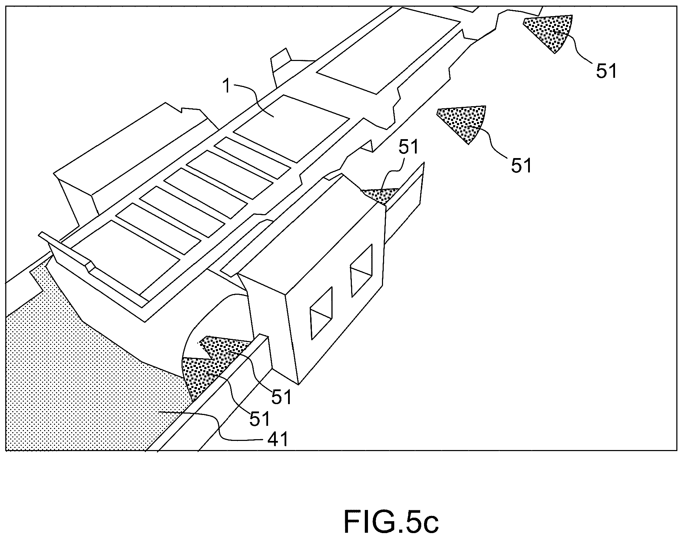

Les figures 5a, 5b et 5c illustrent les trois phases, approche, entrée et recul, en montrant les cônes de détection 51 produits par les capteurs ultrasoniques 31.
La figure 5a illustre la fin de la phase d'approche où seul le faisceau 41 du lidar balaye l'aire de stationnement 3, l'arrière de la remorque faisant face à l'entrée de l'aire de stationnement, à une distance d'environ un mètre.
La figure 5b illustre la fin de la phase d'entrée et le début de la phase de recul. Dans la phase de recul, les capteurs 31 commencent à produire des mesures qui sont exploitées comme l'illustre le positionnement des deux premiers cônes de détection 51 rencontrant les parois latérale 21, 22. Avantageusement, la courte distance entre ces deux premiers capteurs, conformément à la figure 3, permet d'obtenir très vite des informations de cap et de distance latérale.
La figure 5c illustre la suite de la phase de recul où les autres capteurs 31 repérés par leurs cônes de détection 51 rencontrent les parois latérales conduisant à l'obtention d'une série de mesure de distances latérales.

Sur le plan structurel, l'invention apporte notamment les avantages suivants :
- L'invention ne nécessite pas de dispositif actif dans la station 3 ou autour de la station, il suffit que les parois soient réfléchissantes aux ondes émises par le capteur lidar et les capteurs ultrasoniques, la plupart des parois répondant à cette nécessité, en particulier de simple tôles métalliques peuvent être utilisés pour tapisser les parois ;
- Les capteurs peuvent être situés dans des zones protégées du véhicule, ce qui n'est pas le cas d'antennes utilisées dans les solutions antérieures ;
- La fiabilité et la robustesse est assurée, notamment par le fait que, par leur position sur le véhicule, les capteurs sont moins soumis aux chocs, aux salissures, aux dégradations ou aux vibrations notamment, étant donnés qu'ils ne sont pas placés près du sol. De plus, par construction les capteurs ultrasoniques sont redondants.

En combinaison avec cette structure, un dispositif selon l'invention comporte des moyens de traitement 39 pour exploiter toutes les données de mesures issues des capteurs, ces données arrivant de façon asynchrone et totalement désordonnée.

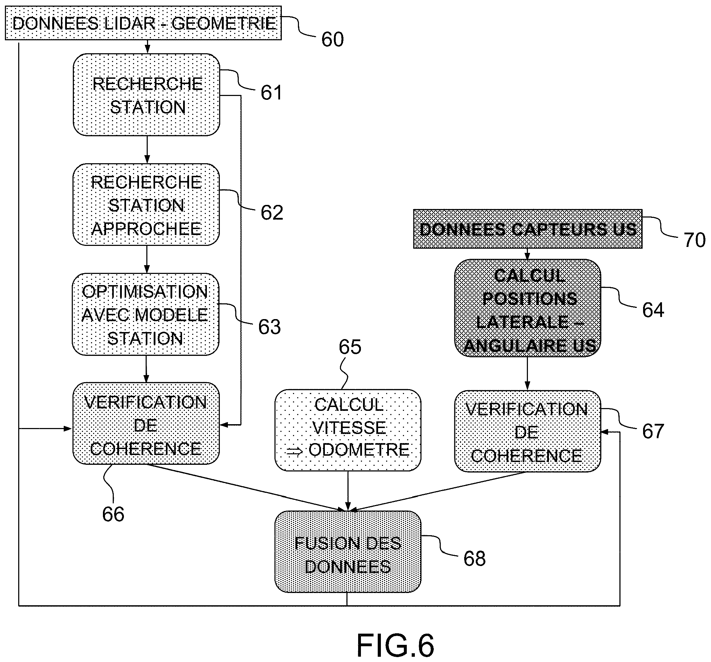

La figure 6 présente les différents modules de traitement possible composant les moyens de traitement 39 d'un dispositif selon l'invention. Les moyens de traitement présentés par cette figure 6 comportent quatre modules de localisation 61, 62, 63, 64, trois modules 61,62, 63 exploitant les mesures du capteur lidar et un module 64 exploitant les mesures des capteurs ultrasoniques 31. Un autre module 65 permet d'obtenir si nécessaire des mesures de vecteurs vitesse.
Un premier module de traitement 61 effectue la recherche de l'aire de stationnement 3, correspondant à la phase d'approche de la figure 4a. Par la suite, en référence à l'exemple d'application des figures, l'aire de stationnement pourra être appelée station. Ce module 61 utilise à la fois les données de mesures issues du capteur lidar et de certaines caractéristiques géométrique 60 de la station 3. Dans cette phase, le système cherche à positionner le véhicule par rapport à une forme globalisante de la station, la forme globale des parois notamment incluant les créneaux ou poteaux.
L'espace des données reçues est discrétisé. Il s'agit d'un espace à deux dimensions dans lequel une donnée, représentant un écho laser, est repérée par un angle et une distance. On obtient des nuages de points, où chaque point correspond à un écho. La densité de points de chaque nuage, ou zone, est étudiée à l'aide de seuils, chaque zone dense étant répertoriée. Ces zones denses sont sensées représenter les poteaux 23 de la station 3, elles doivent donc respecter des distances spécifiques entre-elles. Ces distances spécifiques sont données par ailleurs par les caractéristiques géométriques de la station utilisées par ailleurs. De façon connue, un filtrage basé sur les dimensions de la station est appliqué, permettant d'éliminer d'éventuelles erreurs de détection. De ce filtrage, plusieurs hypothèses de position relative de la station par rapport au véhicule peuvent apparaître. Dans le cas d'une aire de stationnement différente de la station de chargement 3 présentée à titre d'exemple, le module prendrait en considération d'autres caractéristiques géométriques. L'aire de stationnement doit au moins renvoyer des échos de caractéristiques géométriques correspondant à des éléments matériels, permettant de positionner le lidar, et donc l'arrière de la remorque 1, par rapport à ces éléments matériels. Le module 61 est actif au démarrage de la phase de parking.

A la fin de la phase d'approche, un deuxième module de traitement 62 effectue une recherche plus précise pour le positionnement. Il utilise toujours les données du capteur lidar ainsi que certaines caractéristiques géométriques de la station. Mais au lieu de recherche des formes globalisante propres à la station, il recherche des formes géométriques plus simples et plus précises.
Dans les nuages de points, le module recherche ainsi, par exemple, des éléments caractéristiques de la structure de la station comme par exemple les coins que forment les poteaux. Le repérage spatial de ces points de rupture de la structure permet un positionnement relatif latéral et longitudinal. Pour d'autres types d'aires de stationnement d'autres formes caractéristiques peuvent bien sûr être utilisées.

Le module 62 cherche donc par exemple à détecter une série de coins suivant la longueur de la station 3 en détectant les deux parois orthogonales visibles des poteaux. L'alignement de ces coins permet de définir la limite de passage du véhicule. L'estimation de cet alignement dans le repère du capteur permet le positionnement du véhicule par rapport à cette limite.

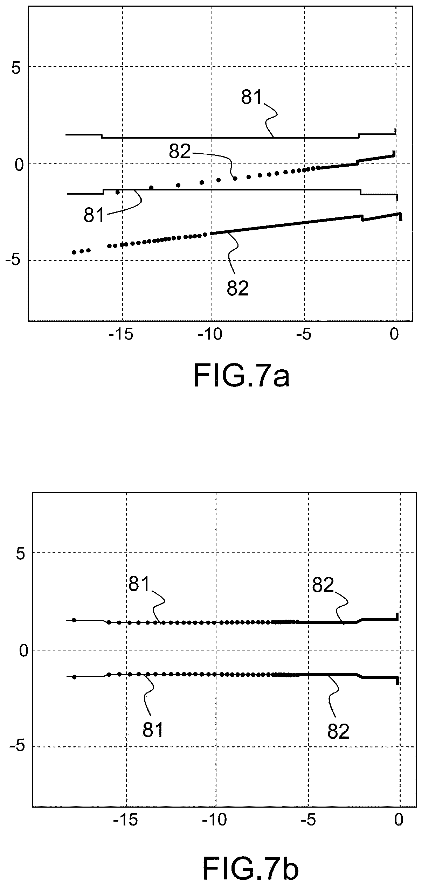

Un troisième module 63 utilise toujours les données issues du capteur lidar, mais au lieu d'utiliser des formes géométriques caractéristiques, telles que les coins comme décrit ci-dessus, il utilise le modèle géométrique complet de la station 3, pour optimiser notamment les calculs de position. Ce module comporte principalement un algorithme d'estimation de transformation entre deux nuages de points. Ce type d'algorithme, en se basant sur deux nuages de points, calcule le mouvement à appliquer à un nuage pour se superposer à l'autre (algorithme de type « best fit »). Les données issues du lidar composent déjà une liste de points définis par des coordonnées polaires (angle, distance). Aussi, pour pouvoir utiliser l'algorithme d'estimation ci-dessus, une discrétisation du modèle de la station 3 est effectuée. De cette discrétisation, on récupère un nuage de points en coordonnées polaires représentant la station théorique. L'algorithme d'estimation, en se basant sur les deux listes de points fournit une estimation de transformation décrivant le mouvement relatif du véhicule entre l'instant présent et le dernier instant connu. Les figures 7a et 7b illustrent le fonctionnement de l'algorithme de transformation entre nuages de points. Sur la figure 7a, on représente par deux lignes 81, le modèle théorique de la station 3 en regard de nuages de points 82 correspondant aux mesures effectuées. A partir de ces deux courbes, on peut calculer le mouvement à appliquer au lidar 30, c'est-à-dire à l'arrière du véhicule, pour superposer les deux lignes comme illustré par la figure 7b.

Un module de traitement 64 utilise les données de mesures des capteurs ultrasoniques 31, ces mesures étant utilisées pour un guidage précis du véhicule dans la station 3. Le module 64 est notamment activé dans les phases illustrées par les figures 4c, 4d, 4e, 5b et 5c.
Les capteurs ultrasoniques 31 sont très précis sur de courtes distances et présentent un faisceau de détection 51 de forme conique. Ils ne peuvent pas être utilisés pour connaître la position longitudinale du véhicule, la nature de leurs mesures ne permettant d'apporter des informations que sur l'angle entre le véhicule et les limites longitudinales de la station, c'est-à-dire les parois longitudinales dans le cas de la station de chargement 3. Les mesures de capteurs ultrasoniques permettent également d'apporter des informations sur la position latérale du véhicule dans la station, c'est-à-dire en fait sur son centrage dans la station.
On peut représenter les mesures des capteurs ultrasoniques comme des arcs de cercles dans le repère local du véhicule dont les centres sont ceux des capteurs, les rayons étant les distances mesurées et le secteur angulaire ouvert correspondant à l'ouverture des cônes de mesure 51. Dans le cas de la station de chargement 3, on remarque cependant que les parois 21, 22 ne sont pas des plans mais forment des créneaux. Les mesures peuvent aussi bien tomber sur la paroi la plus lointaine que sur la paroi la plus proche du véhicule.
Une solution est de garder en mémoire les largeurs maximales et minimales mesurées lors de l'accostage, c'est-à-dire lors de l'entrée dans la station en début de phase d'entrée, et d'associer chaque mesure soit à une mesure de plan lointain ou à une mesure de plan proche. Cette distinction étant faite, le module 64 calcule les quatre plans au mieux, dessinées à partir des mesures.. On obtient alors par moyenne une estimation très précise de l'angle entre le repère local du véhicule et l'axe central de la station 3. Les plans des parois étant désormais connus, le module 64 peut calculer la position de l'axe central y du véhicule 1 dans le repère de référence de la station 3.
Les moyens de traitement utilisent par exemple un module de traitement 65 exploitant des informations de vitesse fournies par exemple par un odomètre. Dans ce cas, le dispositif selon comporte au moins un odomètre, placé sur une roue du véhicule 1. Les capteurs odométriques sont des capteurs de vitesse de rotation des roues. A l'aide de cette information de vitesse de rotation, il est possible d'avoir une estimation de la vitesse de déplacement du véhicule connaissant le diamètre des roues. Si deux roues d'un même essieu sont équipées de ce type de dispositif, il est également possible de déterminer la direction de déplacement.

Deux modules 66, 67 effectuent la vérification de la cohérence des positions calculées par les modules de localisation décrits précédemment. Plus particulièrement un premier module 66 vérifie si les calculs réalisés à partir des mesures du capteur lidar 30 sont cohérents, notamment dans le temps et dans l'espace et un deuxième module 67 vérifie si les calculs réalisés à partir des mesures des capteurs ultrasoniques 31 sont également cohérents, dans le temps et dans l'espace.
La cohérence est évaluée individuellement et collectivement dans le temps et en absolu par rapport aux mesures de capteurs. En pratique, les modules 66, 67 vérifient que deux positions calculées à deux instants successifs ne donnent pas un déplacement incohérent avec les capacités du véhicule et le déplacement demandé à celui-ci. Ils vérifient également que chaque mesure réalisée par un capteur a bien pu l'être dans le cas où le véhicule se trouve à la position calculée compte-tenu de la forme de la station 3. A cet effet, chaque module positionne le véhicule dans le modèle de la station à partir des mesures de position effectuées, le modèle de la station étant modélisé dans le module, ou au moins accessible par celui-ci. Le module analyse si la position est cohérente en fonction de la position précédente.
La vérification de cohérence exploite notamment la comparaison entre positions successives dans le modèle, en fonction des mesures issues des différents capteurs. Cette vérification est effectuée par cycles selon les périodes d'échantillonnage des différents types de capteurs.
La période d'échantillonnage T1 des données issues du capteur lidar 30 est par exemple égale à 40 ms, compatible de la précision des mesures lidar attendue. La période T1 est alors la période du cycle de vérification de cohérence par rapport aux mesures du lidar. La vérification peut être effectuée entre deux échantillonnages successifs, utilisant les données du dernier échantillonnage.
La période d'échantillonnage T2 des données issues des capteurs ultrasoniques est par exemple égale à 20 ms, compatible de la précision des mesures ultrasoniques attendue. De même, la période T2 est la période du cycle de vérification de cohérence par rapport aux mesures ultrasoniques. Enfin, dans le cas où le dispositif selon l'invention utilise un odomètre, la période d'échantillonnage T3 des mesures de vitesses est par exemple égale à 10 ms.
Le module 65 exploitant les mesures odométriques peut réaliser les vérifications lui-même ou transmettre ses données de vecteurs vitesses aux deux modules de vérification de cohérence 66, 67 pour que chacun effectue des vérifications de cohérence en combinant pour l'un 66, les mesures odométriques et les mesures lidar, et pour l'autre 67, les mesures odométriques et les mesures lidar. Dans tous les cas, les temps de vérifications doivent être inférieures aux périodes associées T1, T2, T3.

En cas de non cohérence, plusieurs décisions peuvent être prises, notamment parmi les suivantes :
- arrêt du dispositif et du véhicule ;
- transmission d'une alerte ;
- recalcul des positions.
Les modules 66, 67 transmettent l'information de non cohérence à un organe de commande non représenté qui prend la décision. En cas d'arrêt, l'information de non cohérence est envoyée au circuit de contrôle et de commande du véhicule.
En cas d'alerte, l'information peut être transmise à des moyens d'interface sonore ou visuelle à destination d'un utilisateur, le chauffeur du véhicule notamment si le pilotage n'est pas automatique.

Les moyens de traitement 39 comportent par ailleurs un module de fusion de données 68. Ce module effectue par exemple un filtrage spatio-temporel sur les calculs de position et d'orientation relatives du véhicule par rapport aux parois de la station produits par les différents modules, par exemple du type filtre de Kalman. Le filtrage spatio-temporel peut également être réalisé par un filtre particulaire (méthode de Monte-Carlo séquentielle).
Le filtrage spatio-temporel permet de rendre cohérent l'ensemble des informations calculées par les modules décrits précédemment pour fournir une information de position relative stabilisée, c'est-à-dire complète et peu bruitée. Grâce à ce filtrage spatio-temporel, ce module 68 est capable de fusionner des données asynchrones, issus de capteurs différents, et donc fournissant des éléments de nature différentes. En particulier le lidar fournit des données en x (le long de l'axe longitudinal de la station), en y (le long de l'axe transversal de la station) et en angle θ° pour des mesures de cap. Les capteurs ultrasoniques fournissent une donnée en y, le long de l'axe transversal, et en angle θ° pour le cap. Un odomètre fournit des informations de distance et éventuellement de direction.
Ce module 68 est également capable de gérer des données n'arrivant pas dans le bon ordre temporel, arrivant en ordre dispersé, sans cohérence les unes avec les autres, une mesure lidar échantillonnée avant une mesure ultrasonique pouvant arriver après celle-ci
Ce module 68 prend en compte la précision relative des calculs effectués par chaque module décrit précédemment.

Le dispositif selon l'invention délivre en sortie une information de position relative du véhicule par rapport aux limites de l'aire de stationnement. Cette information est transmise au système de contrôle et de commande du véhicule, connu par ailleurs. A partir de cette information de position relative, le système de contrôle et de commande active le pilotage du véhicule, plus ou moins automatisé, selon la présence ou non d'un chauffeur. L'information de position est par exemple transmise périodiquement, selon les cycles de vérification de cohérence précédemment décrits, par exemple toutes les 10 ms. Les calculs de filtrage spatio-temporel 68 doivent alors être réalisés dans cette période.
La position des capteurs sur le véhicule a été décrite précédemment. Le capteur lidar est placé sur le côté du véhicule faisant face à l'entrée de l'aire de stationnement et les capteurs ultrasoniques sont placés sur les côtés latéraux du véhicule. Il est possible de placer un capteur lidar à l'arrière et aussi à l'avant du véhicule, notamment dans le cas d'une plateforme automobile, pilotée automatiquement, susceptible de rentrer dans un parking par l'avant ou par l'arrière.
Les moyens de traitement 39 peuvent être situés sur la remorque 1 ou dans la cabine 2. Dans un mode de réalisation préférentiel, les capteurs 30, 31 délivrent directement des données numérisées. Celles-ci sont alors fournies aux moyens de traitement par un bus, par une liaison filaire par exemple.

L'invention a été décrite pour un véhicule composé d'une cabine 2 et d'une remorque 1, la remorque devant être parquées dans une station de chargement/déchargement de containers. L'invention s'applique bien sûr pour d'autres types de véhicules. Elle s'applique notamment avantageusement pour des véhicules longs, des autobus par exemple, ou pour des véhicules ayant un gabarit exceptionnel, tous ces véhicules devant être garés avec précision. L'invention a également été présentée avec l'utilisation d'un capteur lidar. On peut utiliser un autre capteur pourvu qu'il présente les mêmes caractéristiques de portée et de précision. Il est ainsi possible d'utiliser un ou plusieurs capteurs vidéo. On peut également utiliser un capteur radar. Il est par ailleurs possible de combiner un ou plusieurs types de capteurs 30. On peut par exemple combiner à l'arrière du véhicule un capteur lidar et un capteur vidéo.

Il en est de même pour les capteurs ultrasoniques qui peuvent être remplacés par des capteurs ayant des caractéristiques analogues. En particulier, il est possible d'utiliser des capteurs télémétriques optiques.
L'invention s'applique pour des véhicules avec chauffeurs ou pour des véhicules pilotés automatiquement. Dans le cas d'un véhicule avec chauffeur, celui-ci contrôle notamment la vitesse.
L'invention a été décrite pour le parking dans une station de chargement et déchargement de containers. Elle s'applique bien sûr pour de nombreux autres types d'aire de stationnement, pourvu qu'elles soient équipées au moins d'une paroi latérale ayant des caractéristiques géométriques réparties longitudinalement. Dans l'exemple de la station 3, ces caractéristiques géométriques sont fournies par les créneaux 23.
L'invention peut également s'appliquer avantageusement pour des aires de stationnement où les parois ne sont pas fixes. C'est le cas notamment pour l'application d'aide au parking d'un autobus entre deux autres autobus. Les parois de l'aire de stationnement sont alors les faces latérales des deux autres autobus, les caractéristiques géométriques pouvant être déduites, par exemple, des portes réparties le long de ces faces latérales.

## Revendications

1. Dispositif d'aide au parking d'un véhicule à l'intérieur d'une aire de stationnement (3) pourvue d'au moins une paroi latérale (21, 22) ayant des caractéristiques géométriques (23) réparties longitudinalement, ledit dispositif étant apte à équiper un véhicule (1, 2), **caractérisé en ce qu'**il comporte au moins :
- un premier capteur (30) placé sur le côté dudit véhicule faisant face à l'entrée de ladite aire (3), le faisceau de mesure (41) dudit capteur balayant ladite aire, ledit capteur effectuant des mesures de distance et d'orientation dudit véhicule par rapport à ladite aire à partir de la reconstruction d'un nuage de points appartenant à la surface de ladite au moins paroi (21, 22) ;
- une série de capteurs (31) placés sur les côtés latéraux dudit véhicule destinés à mesurer la distance desdits côtés de ladite au moins paroi latérale (21, 22), les faisceaux de mesure (51) desdits capteurs balayant ladite au moins paroi (21, 22) de l'intérieur;
- des moyens de traitement (39) calculant la position et l'orientation relative dudit véhicule par rapport à ladite au moins paroi selon au moins trois phases successives :
- une phase d'approche de ladite aire (3) dans laquelle, ladite au moins paroi étant balayée par le faisceau de mesure dudit premier capteur, la position et l'orientation relatives sont calculées (61) par rapport à la position et l'orientation d'une forme globale de ladite au moins paroi déduite dudit nuage ;
- une phase d'entrée dans la dite aire (3) dans laquelle, la position et l'orientation relative sont au moins calculées (62) par rapport à la position et l'orientation de formes géométriques simples déduites dudit nuage, fonctions desdites caractéristiques géométriques (23) ;
- une phase d'avancée dans ladite aire (3) dans laquelle, les moyens de traitement calculent (63) une position et une orientation relatives par comparaison dudit nuage avec un modèle mémorisé de ladite au moins paroi et calculent (64) une autre position et une autre orientation relative à partir des mesures de distance effectuées par les capteurs (31) de ladite série ;
lesdits moyens de traitement (49) comportant un module de fusion des données (68) effectuant un filtrage spatio-temporel des calculs de position et d'orientation relatives produits à partir des différents capteurs (30, 31), les calculs ainsi filtrés donnant une information de position et d'orientation dudit véhicule pour le contrôle de son déplacement.

2. Dispositif selon la revendication 1, **caractérisé en ce que** ledit premier capteur (30) est un capteur lidar.

3. Dispositif selon l'une quelconque des revendications précédentes, **caractérisé en ce que** ledit premier capteur (30) est formé d'au moins un capteur vidéo.

4. Dispositif selon l'une quelconque des revendications précédentes, **caractérisé en ce que** ledit premier capteur (30) est un capteur radar.

5. Dispositif selon l'une quelconque des revendications précédentes, **caractérisé en ce que** les capteurs (31) de ladite série sont des capteurs ultrasoniques.

6. Dispositif selon l'une quelconque des revendications 1 à 4, **caractérisé en ce que** les capteurs (31) de ladite série sont des capteurs télémétriques optiques.

7. Dispositif selon l'une quelconque des revendications précédentes, **caractérisé en ce que** le filtrage spatio-temporel est effectué par un filtre de Kalman.

8. Dispositif selon l'une quelconque des revendications précédentes, **caractérisé en ce que** le filtrage spatio-temporel est effectué par une méthode de Monte Carlo.

9. Dispositif selon l'une quelconque des revendications précédentes, **caractérisé en ce que** les moyens de traitement (49) calculent une position et une orientation relatives à partir des mesures de distance effectuées par les capteurs (31) de ladite série pendant la phase d'entrée.

10. Dispositif selon l'une quelconque des revendications précédentes, **caractérisé en ce que** les moyens de traitement calculent une position et une orientation relatives par comparaison dudit nuage avec un modèle mémorisé au moyen d'un algorithme d'estimation de transformation entre nuages de points (81, 82).

11. Dispositif selon l'une quelconque des revendications précédentes, **caractérisé en ce que** les mesures obtenues par ledit premier capteur sont échantillonnés selon une première période (T1) et les mesures obtenues à partir des capteurs (31) de ladite série sont échantillonnés selon une deuxième période (T2), les calculs de positions et d'orientation étant effectués à l'intérieur d'une période.

12. Dispositif selon l'une quelconque des revendications précédentes, **caractérisé en ce que** les capteurs (31) de ladite série sont positionnés selon des écarts croissants entre deux capteurs consécutifs, à partir du côté supportant ledit premier capteur (30).

13. Dispositif selon l'une quelconque des revendications précédentes, **caractérisé en ce que** les moyens de traitement effectuent (66, 67) des vérifications de cohérences dans le temps et dans l'espace entres les calculs de position et d'orientation relatives successifs obtenus à partir des mesures dudit premier capteur, et entre les calculs de position et d'orientation relatives successifs obtenus à partir des mesures des capteurs (31) de ladite série, les calculs cohérents étant fournis audit module (68) de fusion de données.

14. Dispositif selon l'une quelconque des revendications précédentes, **caractérisé en ce qu'**il comporte en outre au moins un odomètre, placé sur une roue du véhicule, les moyens de traitement effectuant (65) l'estimation du vecteur vitesse de déplacement dudit véhicule à partir des mesures de vitesse de roue produites par l'odomètre, ladite estimation produisant une estimation de position et d'orientation dudit véhicule pris en compte par le module (68) de fusion de données pour définir la position et l'orientation relative dudit véhicule pour le contrôle de son déplacement.

15. Véhicule comportant un système de contrôle et de commande pour l'aide au pilotage, **caractérisé en ce qu'**il est équipé d'un dispositif selon l'une quelconque des revendications précédentes, ledit système fournissant les informations de positions et d'orientation dudit véhicule audit système de contrôle et de commande.

16. Véhicule selon la revendication 15, **caractérisé en ce qu'**il est piloté automatiquement.

17. Véhicule, selon l'une quelconque des revendications 15 ou 16, **caractérisé en ce qu'**il est composé d'une cabine (2) et d'une remorque (1), lesdits capteurs (30, 31) étant placés sur ladite remorque (1).

## Patentansprüche

1. Parkhilfevorrichtung eines Fahrzeugs innerhalb einer Parkfläche (3), welcher mit mindestens einer Seitenwand (21, 22) versehen ist, welche in Längsrichtung verteilte geometrische Merkmale (23) besitzt, wobei die Vorrichtung in der Lage ist, ein Fahrzeug (1,2) auszurüsten, **dadurch gekennzeichnet, dass** sie mindestens Folgendes beinhaltet:
- einen ersten Sensor (30), welcher an der Seite des Fahrzeugs platziert ist, welche dem Eingang der Fläche (3) zugewandt ist, wobei der Messstrahl (41) des Sensors die Fläche abtastet, wobei der Sensor Messungen der Entfernung und der Ausrichtung des Fahrzeugs in Bezug auf die Fläche mit Hilfe der Rekonstruktion einer Wolke von Punkten vornimmt, welche zur Oberfläche der mindestens einen Wand (21, 22) gehören;
- eine Reihe von Sensoren (31), welche an den seitlichen Seiten des Fahrzeugs platziert sind, welche dazu bestimmt sind, die Entfernung der Seiten von der mindestens einen Seitenwand (21, 22) zu messen, wobei die Messstrahlen (51) der Sensoren die mindestens eine Wand (21, 22) von innen abtasten;
- Bearbeitungsmittel (39), welche die relative Position und die relative Ausrichtung des Fahrzeugs in Bezug auf die mindestens eine Wand entsprechend mindestens drei aufeinanderfolgenden Phasen berechnen:
- einer Phase der Annäherung der Fläche (3), bei welcher, da die mindestens eine Wand durch den Messstrahl des ersten Sensors abgetastet wird, die relative Position und die relative Ausrichtung in Bezug auf die Position und die Ausrichtung einer globalen Form der mindestens einen Wand, welche von der Wolke abgeleitet werden, berechnet (61) werden;
- einer Phase des Eintritts in die Fläche (3), bei welcher die relative Position und die relative Ausrichtung mindestens in Bezug auf die Position und die Ausrichtung einfacher geometrischer Formen berechnet (62) werden, welche von der Wolke abgeleitet wurden, welche Funktionen dieser geometrischen Merkmale (23) sind;
- einer Phase der Vorwärtsbewegung in der Fläche (3), bei welcher die Bearbeitungsmittel eine relative Position und eine relative Ausrichtung durch Vergleich der Wolke mit einem gespeicherten Modell der mindestens einen Wand berechnen (63) und eine andere Position und eine andere Ausrichtung anhand von Messungen der Entfernung, welche durch die Sensoren (31) der Reihe vorgenommen wurden, berechnen (64);
wobei die Bearbeitungsmittel (49) ein Modul zur Fusion der Daten (68) beinhalten, welches eine räumlich-zeitliche Filterung der Berechnungen der relativen Position und der relativen Ausrichtung anhand der unterschiedlichen Sensoren (30, 31) vornehmen, wobei die so gefilterten Berechnungen eine Positions- und Ausrichtungsinformation des Fahrzeugs zur Kontrolle seiner Bewegung erteilen.

2. Vorrichtung nach Anspruch 1, **dadurch gekennzeichnet, dass** der erste Sensor (30) ein Lidar-Sensor ist.

3. Vorrichtung nach einem der vorhergehenden Ansprüche, **dadurch gekennzeichnet, dass** der erste Sensor (30) aus mindestens einem Videosensor gebildet ist.

4. Vorrichtung nach einem der vorhergehenden Ansprüche, **dadurch gekennzeichnet, dass** der erste Sensor (30) ein Radarsensor ist.

5. Vorrichtung nach einem der vorhergehenden Ansprüche, **dadurch gekennzeichnet, dass** die Sensoren (31) der Reihe Ultraschallsensoren sind.

6. Vorrichtung nach einem der Ansprüche 1 bis 4, **dadurch gekennzeichnet, dass** die Sensoren (31) der Reihe optische, telemetrische Sensoren sind.

7. Vorrichtung nach einem der vorhergehenden Ansprüche, **dadurch gekennzeichnet, dass** die räumlich-zeitliche Filterung durch einen Kalman-Filter vorgenommen wird.

8. Vorrichtung nach einem der vorhergehenden Ansprüche, **dadurch gekennzeichnet, dass** die räumlich-zeitliche Filterung anhand eines Monte Carlo-Verfahrens vorgenommen wird.

9. Vorrichtung nach einem der vorhergehenden Ansprüche, **dadurch gekennzeichnet, dass** die Bearbeitungsmittel (49) eine relative Position und eine relative Ausrichtung anhand von Entfernungsmessungen vornehmen, welche durch die Sensoren (31) der Reihe während der Eintrittsphase vorgenommen wurden.

10. Vorrichtung nach einem der vorhergehenden Ansprüche, **dadurch gekennzeichnet, dass** die Bearbeitungsmittel eine relative Position und eine relative Ausrichtung durch Vergleich der Wolke mit einem gespeicherten Modell anhand eines Transformations-Schätzungs-Algorithmus zwischen Punktewolken (81, 82) berechnen.

11. Vorrichtung nach einem der vorhergehenden Ansprüche, **dadurch gekennzeichnet, dass** die durch den ersten Sensor erzielten Messungen entsprechend einer ersten Periode (T1) abgetastet werden, und die durch die Sensoren (31) der Reihe erzielten Messungen entsprechend einer zweiten Periode (T2) abgetastet werden, wobei die Positions- und Ausrichtungsberechnungen innerhalb einer Periode vorgenommen werden.

12. Vorrichtung nach einem der vorhergehenden Ansprüche, **dadurch gekennzeichnet, dass** die Sensoren (31) der Reihe entsprechend ansteigenden Abständen zwischen zwei aufeinanderfolgenden Sensoren positioniert sind, ausgehend von derjenigen Seite, welche den ersten Sensor (30) stützt.

13. Vorrichtung nach einem der vorhergehenden Ansprüche, **dadurch gekennzeichnet, dass** die Bearbeitungsmittel Kohärenzüberprüfungen in Zeit und Raum zwischen den aufeinanderfolgenden Berechnungen der relativen Position und der relativen Ausrichtung durchführen (66, 67), welche anhand der Messungen des ersten Sensors erzielt wurden, und zwischen den aufeinanderfolgenden Berechnungen der relativen Position und der relativen Ausrichtung, welche anhand der Messungen der Sensoren (31) der Reihe erzielt wurden, wobei die kohärenten Berechnungen dem Datenfusionsmodul (68) bereitgestellt werden.

14. Vorrichtung nach einem der vorhergehenden Ansprüche, **dadurch gekennzeichnet, dass** sie zudem mindestens einen Wegstreckenmesser beinhaltet, welcher an einem Rad des Fahrzeugs platziert ist, wobei die Bearbeitungsmittel die Schätzung des Geschwindigkeitsvektors der Bewegung des Fahrzeugs anhand von Geschwindigkeitsmessungen des Rades vornehmen (65), welche durch den Wegstreckenmesser erzeugt werden, wobei die Schätzung eine Schätzung der Position und Ausrichtung des Fahrzeugs erzeugt, welche durch das Datenfusionsmodul (68) berücksichtigt wird, um die relative Position und die relative Ausrichtung des Fahrzeugs zur Kontrolle seiner Bewegung zu definieren.

15. Fahrzeug, welches ein Kontroll- und Steuerungssystem zur Lenkhilfe beinhaltet, **dadurch gekennzeichnet, dass** es mit einer Vorrichtung nach einem der vorhergehenden Ansprüche ausgerüstet ist, wobei das System die Positions- und Ausrichtungsinformationen des Fahrzeugs an das Kontroll- und Steuerungssystem bereitstellt.

16. Fahrzeug nach Anspruch 15, **dadurch gekennzeichnet, dass** es automatisch gelenkt wird.

17. Fahrzeug nach einem der vorhergehenden Ansprüche 15 oder 16, **dadurch gekennzeichnet, dass** es aus einer Kabine (2) und einem Anhänger (1) besteht, wobei die Sensoren (30, 31) an dem Anhänger (1) platziert sind.

## Claims

1. A device for assisting with the parking of a vehicle within a parking space (3) provided with at least one lateral wall (21, 22) having longitudinally distributed geometric features (23), said device being capable of equipping a vehicle (1, 2), **characterized in that** it comprises at least:
- a first sensor (30) placed on the side of said vehicle facing the entrance of said space (3), the measuring beam (41) of said sensor scanning said space, said sensor making measurements of the distance and orientation of said vehicle with respect to said space based on the reconstruction of a cloud of points belonging to the surface of said walls (21, 22);
- a series of sensors (31) placed on the lateral sides of said vehicle that are intended to measure the distance from said sides to said lateral walls (21, 22), the measuring beams (51) of said sensors scanning said inner walls (21, 22);
- processing means (39) calculating the position and the relative orientation of said vehicle with respect to said walls in at least three separate phases:
- a phase of approaching said space (3) in which, said walls being scanned by the measuring beam of said first sensor, the relative position and orientation are calculated (61) with respect to the position and orientation of a general form of said walls deduced from said cloud;
- a phase of entering said space (3) in which the position and the relative orientation are at least calculated (62)with respect to the position and orientation of simple geometric forms deduced from said cloud, as a function of said geometric features (23);
- a phase of advancing into said space (3) in which the processing means calculate (63) a relative position and orientation by comparing said cloud with a memorized model of said walls and calculate (64) another position and another relative orientation based on the distance measurements made by the sensors (31) of said series;
said processing means (49) comprising a data fusion module (68) that carries out spatio-temporal filtering of the relative position and orientation calculations produced from the various sensors (30, 31), the calculations thus filtered giving information on the position and orientation of said vehicle in order to control its movement.

2. The device as claimed in claim 1, **characterized in that** said first sensor (30) is a lidar sensor.

3. The device as claimed in any one of the preceding claims, **characterized in that** said first sensor (30) is formed from at least one video sensor.

4. The device as claimed in any one of the preceding claims, **characterized in that** said first sensor (30) is a radar sensor.

5. The device as claimed in any one of the preceding claims, **characterized in that** the sensors (31) of said series are ultrasound sensors.

6. The device as claimed in any one of claims 1 to 4, **characterized in that** the sensors (31) of said series are optical telemetry sensors.

7. The device as claimed in any one of the preceding claims, **characterized in that** the spatio-temporal filtering is carried out using a Kalman filter.

8. The device as claimed in any one of the preceding claims, **characterized in that** the spatio-temporal filtering is carried out using a Monte Carlo method.

9. The device as claimed in any one of the preceding claims, **characterized in that** the processing means (49) calculate a relative position and orientation from the distance measurements made by the sensors (31) of said series during the entry phase.

10. The device as claimed in any one of the preceding claims, **characterized in that** the processing means calculate a relative position and orientation by comparing said cloud with a memorized model is carried out by applying an algorithm for estimating the transformation between clouds of points (81, 82).

11. The device as claimed in any one of the preceding claims, **characterized in that** the measurements obtained by said first sensor are sampled in a first period (T1) and the measurements obtained from the sensors (31) of said series are sampled in a second period (T2), the position and orientation calculations being carried out within one period.

12. The device as claimed in any one of the preceding claims, **characterized in that** the sensors (31) of said series are positioned with increasing spacing between two consecutive sensors, starting from the side bearing said first sensor (30).

13. The device as claimed in any one of the preceding claims, **characterized in that** the processing means carry out (66, 67) consistency checks in time and space between the successive calculations of relative position and orientation obtained from measurements by said first sensor, and between the successive calculations of relative position and orientation obtained from measurements by the sensors (31) of said series, the consistent calculations being delivered to said data fusion module (68).

14. The device as claimed in any one of the preceding claims, **characterized in that** it additionally comprises at least one odometer, placed on a wheel of the vehicle, the processing means carrying out (65) the estimation of the movement speed vector of said vehicle based on wheel speed measurements produced by the odometer, said estimation producing an estimate of the position and orientation of said vehicle that is taken into account by the data fusion module (68) so as to define the position and relative orientation of said vehicle in order to control its movement.

15. A vehicle comprising a monitoring and control system for assisting with driving, **characterized in that** it is equipped with a device as claimed in any one of the preceding claims, said system providing information on the positions and orientation of said vehicle to said monitoring and control system.

16. The vehicle as claimed in claim 15, **characterized in that** it is automatically driven.

17. The vehicle as claimed in either of claims 15 or 16, **characterized in that** it is composed of a cab (2) and a trailer (1), said sensors (30, 31) being placed on said trailer (1).
